# EUROPEAN PATENT APPLICATION

(11) **EP 4 137 807 A1**
(43) Date of publication of application: **22.02.2023**
(21) Application number: 21813136.5
(22) Date of filing: 09.04.2021
(51) Int. Cl.: G01N 27/26, G01N 27/36, G01N 27/416

(54) **MEASUREMENT DEVICE AND METHOD FOR DETERMINING TIME TO REPLACE GLASS RESPONSIVE MEMBRANE**

(30) Priority: 29.05.2020 JP 2020094501
(71) Applicant: HORIBA Advanced Techno, Co., Ltd., Kyoto 601-8551 (JP)
(72) Inventor: KINOSHITA, Takamasa, Kyoto-shi, Kyoto 601-8551 (JP); ITO, Yuichi, Kyoto-shi, Kyoto 601-8551 (JP); NISHIO, Yuji, Kyoto-shi, Kyoto 601-8551 (JP)
(74) Representative: Isarpatent
(86) International application number: PCT/JP2021/015006
(87) International publication number: WO 2021/241031

(57) **Abstract**

The present invention appropriately determines a time to replace a responsive glass membrane for measuring a sample containing hydrofluoric acid. A measurement device for measuring a hydrogen ion concentration of a liquid sample containing hydrofluoric acid, the measurement device including a glass electrode that measures a hydrogen ion concentration in the liquid sample, the glass electrode including a responsive glass membrane, a membrane resistance measurement unit that measures a membrane resistance value of the responsive glass membrane, a temperature measurement unit that measures a temperature of an environment in which the responsive glass membrane is disposed, and an output unit that outputs a replacement index for replacing the responsive glass membrane based on the membrane resistance value and the temperature.

## Description

### Technical Field

The present invention relates to a measurement device and a method for determining a time to replace a responsive glass membrane.

### Background Art

When hydrofluoric acid is contained in wastewater or the like from a semiconductor factory, it is necessary to neutralize the hydrofluoric acid before the wastewater or the like is discharged into the environment. Thus, a pH meter is disposed in a channel through which such a liquid flows and the pH of the wastewater is constantly monitored.

As the pH meter, a glass electrode with a responsive glass membrane is typically used. The responsive glass membrane becomes thin over time by being dissolved by hydrofluoric acid and dissolves completely (has a hole) in the end.

The responsive glass membrane thinned with dissolution can still be used for measurement without any problem until it has a hole to cause an internal liquid and a liquid sample to be measured to contact each other. Thus, there is a problem that people do not notice a need for replacement of the responsive glass membrane until the responsive glass membrane has a hole and a measurement becomes unable to be made. In addition, since the concentration of hydrofluoric acid contained in wastewater or the like is not constant even at the same place, it is also difficult to uniformly estimate the life of the responsive glass membrane from the thickness of glass or the like and replace the responsive glass membrane.

### Citation List

### Patent Literature

Patent Literature 1: JP 2009-072714 A

### Summary of Invention

### Technical Problem

The present invention has been made in view of the problems. An object of the present invention is to determine a time to replace a responsive glass membrane for measuring a sample containing hydrofluoric acid.

The inventors of the present invention have focused on the fact that the thickness and resistance value of the responsive glass membrane have a relationship in which a responsive glass membrane having a large thickness has a large resistance value. The inventors have considered determining a time to replace the responsive glass membrane based on the membrane resistance value of the responsive glass membrane.

The inventors of the present invention have also considered using the temperature of the environment in which the responsive glass membrane is placed to determine a time to replace the responsive glass membrane in consideration of the fact that the resistance value of the responsive glass membrane changes depending on the temperature of the environment in which the responsive glass membrane is placed. Solution to Problem

That is, a measurement device according to the present invention is a measurement device for measuring a hydrogen ion concentration of a liquid sample containing hydrofluoric acid, the measurement device including a glass electrode that measures a hydrogen ion concentration in the liquid sample, the glass electrode including a responsive glass membrane, a membrane resistance measurement unit that measures a membrane resistance value of the responsive glass membrane, a temperature measurement unit that measures a temperature of an environment in which the responsive glass membrane is disposed, and an output unit that outputs a replacement index for replacing the responsive glass membrane based on the membrane resistance value and the temperature.

According to such a measurement device, even when the hydrofluoric acid concentration or the temperature of the environment in which the responsive glass membrane is placed is not constant, the time to replace the responsive glass membrane can be determined.

As a result, in a continuous measurement of the hydrogen ion concentration of a liquid sample containing hydrofluoric acid, it is possible to eliminate time and cost to frequently replace the responsive glass membrane because of underestimation of the use period of the responsive glass membrane. The risk of sudden abnormal measurement can also be reduced.

To eliminate time for a user to determine a time to replace the responsive glass membrane, it is preferable to further include a determination unit that determines a time to replace the responsive glass membrane based on the membrane resistance value and the temperature.

Examples of a specific embodiment of the present invention include the measurement device that convers the membrane resistance value into, based on the temperature, a membrane resistance value at a predetermined temperature and determines a time to replace the responsive glass membrane based on the converted value.

The measurement device preferably further includes a storage unit that stores a correlation between the membrane resistance value and the temperature measured by the temperature measurement unit.

The storage unit may further store a correlation between a composition of the responsive glass membrane and the membrane resistance value.

For the user to easily notice the time for replacement of the responsive glass membrane, it is preferable that a warning be issued when the converted value is equal to or less than a preset threshold.

To further reduce the frequency of the replacement of the responsive glass membrane, it is preferable that the responsive glass membrane have a composition with poor dissolubility, for example, containing one or more elements selected from scandium, yttrium, titanium, zirconium, hafnium, niobium, and tantalum. Advantageous Effects of Invention

According to the present invention, the time to replace the responsive glass membrane for measuring a liquid sample containing hydrofluoric acid can be determined, and thus the responsive glass membrane can be replaced less frequently than before in a case where the pH of the liquid sample containing hydrofluoric acid needs to be continuously monitored.

### Brief Description of Drawings

FIG. 1 is a schematic view illustrating an entire measurement device according to an embodiment of the present invention.
FIG. 2 is a schematic view illustrating a responsive glass membrane according to the present embodiment and the periphery of the responsive glass membrane.
FIG. 3 is a graph showing a change in membrane resistance value (measured value) of a responsive glass membrane.
FIG. 4 is a graph showing a relationship between a membrane resistance value of a responsive glass membrane and a temperature.
FIG. 5 is a graph showing a change in membrane resistance value after temperature correction.

### Reference Signs List

- 1: measurement device
- 2: glass electrode
- 21: responsive glass membrane
- 3: comparison electrode
- 6: membrane resistance measurement unit
- 7: temperature measurement unit
- 8: determination unit
- 9: storage unit
- S: liquid sample

### Description of Embodiments

Hereinafter, an embodiment of the present invention will be described with reference to the drawings.

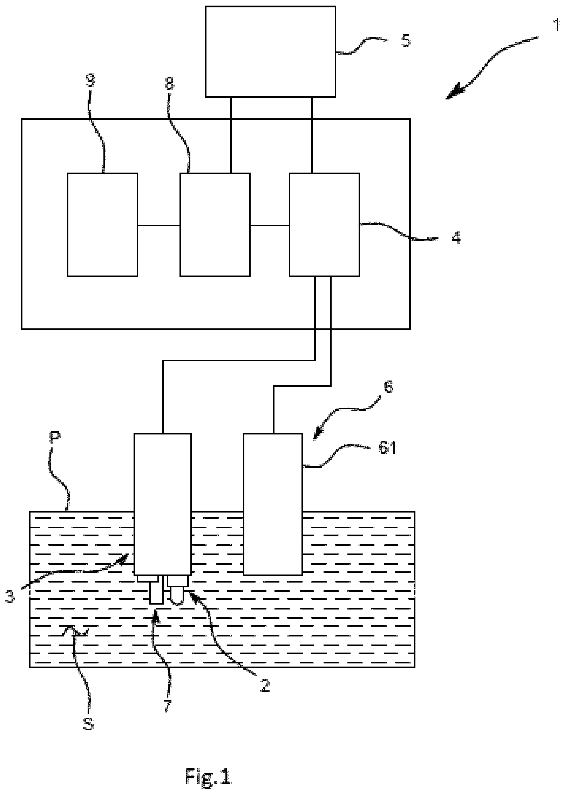

As illustrated in FIG. 1 for example, a measurement device 1 according to the present embodiment is disposed in a channel of wastewater from a semiconductor factory or the like in which hydrofluoric acid may be contained, and it monitors whether hydrofluoric acid is appropriately neutralized by continuously measuring a hydrogen ion concentration in the wastewater.

Specifically, the measurement device 1 includes a glass electrode 2 provided with a responsive glass membrane, a comparison electrode 3 that is used together with the glass electrode 2, a calculation unit 4 that calculates an ion concentration by measuring a difference between the potential output from the glass electrode and the potential output from the comparison electrode, a display unit 5 that displays the ion concentration calculated by the calculation unit 4. The calculation unit 4 is configured with a computer including, for example, a CPU, a memory, an input/output interface, and an AD converter.

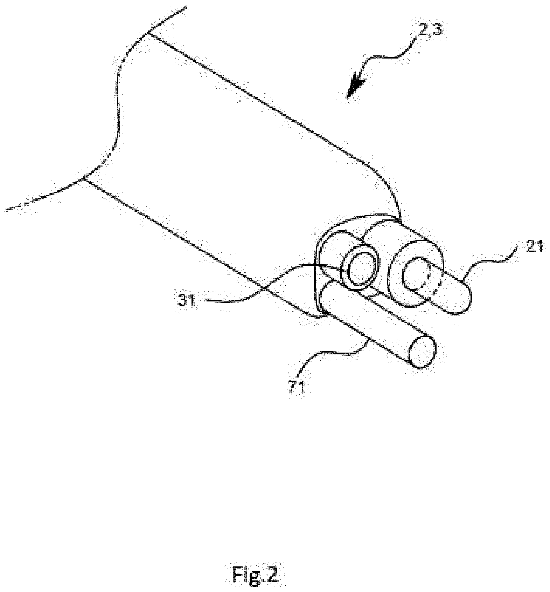

The glass electrode 2 and the comparison electrode 3 are disposed in such a manner to be immersed in a liquid sample S flowing in a wastewater channel P described above or the like. In the present embodiment, as illustrated in FIGS. 1 and 2, a composite electrode in which the glass electrode 2 and the comparison electrode 3 are integrally formed is used.

The glass electrode 2 includes, for example, an internal liquid, a housing that stores the internal liquid, an internal electrode provided to be immersed in the internal liquid, and a responsive glass membrane 21 disposed between the internal liquid and the liquid sample. In the present embodiment, as illustrated in FIG. 2, the responsive glass membrane 21 of a chip-replaceable type is used in which the responsive glass membrane 21 attached to a separate member detachable from the housing is screwed and fixed together with the member in a screw hole formed in the housing, for example.

The comparison electrode 3 includes, for example, an internal liquid, a housing that stores the internal liquid, an internal electrode provided to be immersed in the internal liquid, and a liquid junction unit 31 that electrically connects the internal liquid and the liquid sample. The liquid junction unit 31 is formed of, for example, a ceramic plate or the like disposed inside a through hole formed in the housing. In the present embodiment, the liquid junction unit 31 is also of a chip-replaceable type in which the liquid junction unit 31 attached to a separate member detachable from the housing is screwed and fixed together with the member in a screw hole formed in the housing, for example.

The measurement device 1 according to the present embodiment further includes a membrane resistance measurement unit 6 that measures the membrane resistance value of the responsive glass membrane 21, a temperature measurement unit 7 that measures the temperature of the environment in which the responsive glass membrane 21 is disposed, and a determination unit 8 that determines the time to replace the responsive glass membrane based on the membrane resistance value measured by the membrane resistance measurement unit 6 and the temperature measured by the temperature measurement unit 7.

The membrane resistance measurement unit 6 includes an insulation resistance meter 61 that measures the electric resistance of the responsive glass membrane 21 and a membrane resistance calculation unit. The insulation resistance meter 61 includes, for example, a conductive material such as a platinum wire that is to be immersed in the liquid sample S like the glass electrode 2.

The membrane resistance calculation unit includes a voltmeter that detects the voltage between the conductive material and the internal electrode of the glass electrode via the responsive glass membrane when a current flows through the conductive material. The membrane resistance calculation unit calculates the resistance value of the responsive glass membrane based on the voltage value detected by the voltmeter. Alternatively, the membrane resistance calculation unit includes an ammeter that detects the current flowing between the conductive material and the internal electrode of the glass electrode via the responsive glass membrane when a voltage is applied to the conductive material. The membrane resistance calculation unit calculates the resistance value of the responsive glass membrane based on the current value detected by the ammeter.

In the present embodiment, the calculation unit 4 also functions as the membrane resistance calculation unit.

The temperature measurement unit 7 includes a temperature sensor 71 and a temperature calculation unit. The temperature sensor 71 in the present embodiment is disposed in the vicinity of the responsive glass membrane 21 of the glass electrode 2 to measure the temperature of the liquid sample S in the vicinity of the responsive glass membrane 21. In the present embodiment, the calculation unit 4 also functions as the temperature calculation unit.

When the thickness of the responsive glass membrane 21 decreases, the membrane resistance value of the responsive glass membrane 21 decreases. The determination unit 8 is configured to use this relationship to determine that it is time to replace the responsive glass membrane 21 when the membrane resistance value of the responsive glass membrane 21 measured by the membrane resistance measurement unit 6 becomes smaller than a preset threshold.

The threshold is set in advance in accordance with the composition of the responsive glass membrane 21 with reference to, for example, past measurement data. For example, in the past measurement date, an average membrane resistance value at 24 hours before the responsive glass membrane 21 dissolves and has a hole may be used. The measurement device 1 may further include a storage unit 9 that stores the threshold.

The storage unit 9 may store, for example, a formula or a table representing the correlation between the membrane resistance value and the temperature in addition to the threshold.

Examples of another factor that affects the degree of dissolution of the responsive glass membrane 21 include the composition of the responsive glass membrane 21. Specifically, for example, by using the responsive glass membrane 21 containing one or more elements selected from scandium, yttrium, titanium, zirconium, hafnium, niobium, and tantalum, it is possible to hold down the degree of dissolution (dissolution rate) with hydrofluoric acid as compared with the responsive glass membrane 21 not containing these elements.

Possible mechanisms of the improvement in hydrofluoric acid resistance by addition of these elements are as follows.

Trivalent rare earth elements such as scandium and yttrium have higher electronegativity than lanthanoids such as lanthanum (La) added for tightening a network of glass of the responsive glass membrane. Thus, the glass network can be further tightened and strengthened by replacing part of the lanthanoid contained in the responsive glass membrane with a trivalent rare earth element such as scandium or yttrium. It is considered that this strengthening improves the hydrofluoric acid resistance of the responsive glass membrane.

Tetravalent elements such as titanium, zirconium, and hafnium have a larger ionic radius than a main element such as silicon forming the glass network. Thus, these elements have a larger coordination number of oxygen and a higher bonding force with oxygen than silicon or the like. For this reason, it is considered that addition of these elements causes the glass network to strengthen and the hydrofluoric acid resistance of the responsive glass membrane to improve.

Pentavalent elements such as tantalum and niobium have a larger number of bonds (the number of bonds is five) than silicon (the number of bonds is four) which is a main element forming the glass network. Thus, it is considered that addition of these elements causes the glass network to form crosslinks and strengthen, which contributes, as a result, to the improvement in hydrofluoric acid resistance of the responsive glass membrane.

As seen above, the dissolution rate with hydrofluoric acid may vary depending on the composition of the responsive glass membrane 21. Thus, the storage unit 9 may store a formula, a table, or the like representing the correlation between the composition and membrane resistance value of the responsive glass membrane 21.

When the membrane resistance value is equal to or smaller than the threshold, the thickness of the responsive glass membrane 21 is reduced, and it can be predicted that the responsive glass membrane 21 is going to have a hole within 24 hours, for example. Thus, the measurement device 1 according to the present embodiment further includes an output unit that outputs a warning when the determination unit 8 determines that the membrane resistance value has become equal to or smaller than the threshold. The display unit 5 may also function as the output unit.

The procedures and method for determining the time to replace the responsive glass membrane 21 with the measurement device 1 configured as described above are as follows.

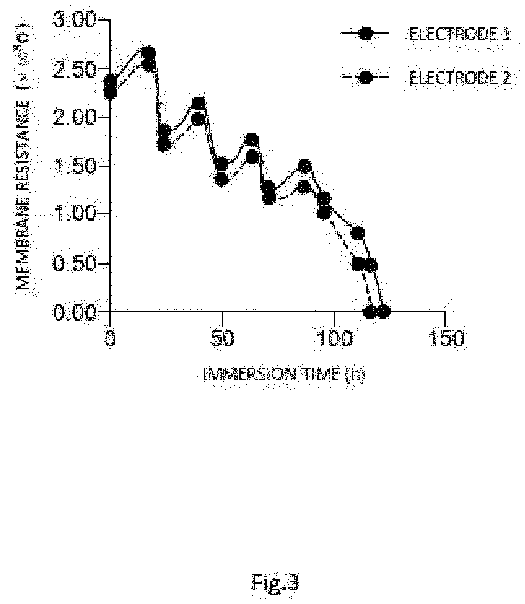

The membrane resistance measurement unit 6 measures the membrane resistance value of the responsive glass membrane 21. An example of the membrane resistance value of the responsive glass membrane 21 measured by the membrane resistance measurement unit 6 is shown in FIG. 3. The graph of FIG. 3 shows the results of continuous measurement of the membrane resistance value of the responsive glass membrane 21 of two hydrofluoric acid-resistant pH electrodes (product number 7123) manufactured by HORIBA Advanced Techno Co., Ltd. with an insulation resistance meter (Agilent 433913). The measurement is performed twice a day and for about 125 hours for each time. In the graph of FIG. 3, it can be seen that the membrane resistance value greatly moves up and down for each measurement. From such a graph waveform with large vertical movement, it is difficult to estimate the period until the responsive glass membrane 21 dissolves and has a hole (the life of the responsive glass membrane) and determine the time to replace the responsive glass membrane 21.

In the graph of FIG. 3, when one day in the graph is taken out as an example to study the cause of the large variation of the membrane resistance value, the first measurement on this day was performed at 9:00 AM, and the temperature of the measurement environment at this time was 19.5°C. The second measurement on the same day was performed at 5:00 PM, and the temperature of the measurement environment at this time was 22.8°C. From this, the inventors of the present invention have considered that such steep vertical movement of the graph waveform is caused by the temperature variations in the vicinity of the responsive glass membrane 21 for each measurement.

Thus, the inventors of the present invention have attempted to measure the temperature of the environment where the responsive glass membrane 21 is disposed, for example, the temperature of the liquid sample S in the vicinity of the responsive glass membrane 21 by the temperature measurement unit 7 simultaneously with the measurement of the membrane resistance value, and to correct the membrane resistance value using the measured temperature.

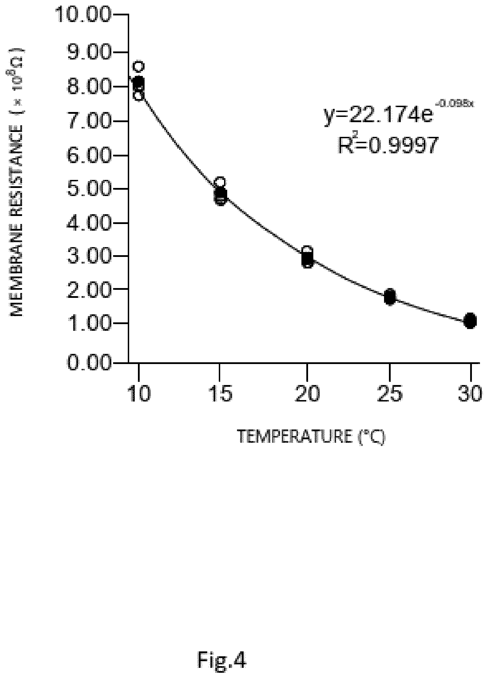

As a result of examining the relationship between the membrane resistance value of the responsive glass membrane 21 and the temperature, for example, for the responsive glass membrane 21 of the hydrofluoric acid-resistant pH electrode (product number 7123) manufactured by HORIBA Advanced Techno Co., Ltd., a calibration curve representing the correlation between the membrane resistance value and the temperature as shown in FIG. 4 was obtained. This calibration curve is obtained from the result of measuring the membrane resistance value of the responsive glass membrane 21 at each temperature using three identical glass electrodes 2. The black circles in FIG. 4 represent average values of membrane resistance values of the three glass electrodes 2.

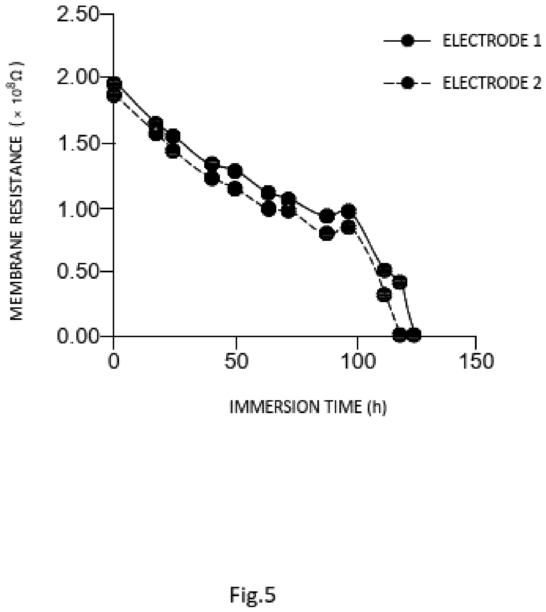

When the membrane resistance value of the graph of FIG. 3 described above was subjected to temperature correction using this calibration curve, and a converted value was obtained by converting the corrected membrane resistance value into a membrane resistance value at a predetermined temperature (for example, 25°C), a graph as shown in FIG. 5 was obtained. The graph of FIG. 5 has a graph waveform with which the life of the responsive glass membrane 21 can be easily estimated, in which the vertical movement of the membrane resistance value is moderated by correcting the variations in the membrane resistance value due to temperature.

Thus, in the present embodiment, the determination unit 8 performs a temperature correction on the membrane resistance value measured by the membrane resistance measurement unit 6 by using the calibration curve or the like stored in the storage unit 9, for example as illustrated in FIG. 5. Further, the determination unit 8 compares the membrane resistance value after the correction with the threshold stored in the storage unit 9, and it determines whether the membrane resistance value after the temperature correction is equal to or smaller than the threshold, thereby determining whether it is time to replace the responsive glass membrane 21.

In the present embodiment, the threshold stored in the storage unit 9 is set based on the membrane resistance value of the responsive glass membrane 21 having the same composition measured in the past on the same wastewater channel P as described above, and for example, the membrane resistance value at the time when 24 hours has passed and the responsive glass membrane 21 becomes unusable with a hole is used as a reference.

For the responsive glass membrane 21 having a different composition from the responsive glass membrane 21 measured in the past, a calibration curve for the composition of the responsive glass membrane 21 is further created, and the determination unit 8 further corrects the membrane resistance value after temperature correction based on the calibration curve. With this configuration, the time to replace the responsive glass membrane can be determined more accurately.

In the present embodiment, when the determination unit 8 determines that it is time to replace the responsive glass membrane 21, the output unit issues, for example, a warning to urge a user to replace the responsive glass membrane 21, as a replacement index for the responsive glass membrane.

According to the measurement device 1 configured as described above and the method for determining the time to replace a responsive glass membrane, the time to replace the responsive glass membrane 21 is determined based on not only the membrane resistance value of the responsive glass membrane 21 but also the temperature of the environment in which the responsive glass membrane 21 is placed, and thus the time to replace the responsive glass membrane 21 can be accurately determined even when the temperature of the environment in which responsive glass membrane 21 is placed is not constant.

As a result, in a continuous measurement of the hydrogen ion concentration of the liquid sample S containing hydrofluoric acid, it is possible to eliminate time and cost to frequently replace the responsive glass membrane 21 because of underestimation of the use period of the responsive glass membrane 21.

Since the storage unit 9 stores the formula or table representing the correlation between the composition and membrane resistance value of the responsive glass membrane 21, the time to replace the responsive glass membrane 21 can be determined more accurately based on the composition of the responsive glass membrane 21.

The present invention is not limited to the embodiment described above.

For example, the determination unit may perform machine learning of data of the membrane resistance value measured in the past, predict, for example, a tendency of a change in the membrane resistance value depending on a time zone of a day or a change in the membrane resistance value depending on a day of the week, and estimate a time until the responsive glass membrane dissolves and has a hole based on the predicted tendency.

For example, the dissolution rate of the responsive glass membrane may be calculated from the slope of the graph of the corrected membrane resistance value as shown in FIG. 5, and the time for replacement may be predicted from the calculated dissolution rate and a preset threshold.

In the embodiment described above, a method of correcting the membrane resistance value by using a calibration curve representing the correlation between the composition and membrane resistance value of the responsive glass membrane has been described, but the present invention is not limited to such a method. The threshold may be set using a formula, a table, or the like representing the correlation between the composition of the responsive glass membrane and the threshold.

The threshold may be set in various time spans according to the use environment of the measurement device, for example, several hours, or two days, not only 24 hours until the responsive glass membrane has a hole.

In the embodiment described above, a case where the threshold is set for each composition of the responsive glass membrane has been described, but the threshold may be set regardless of the composition of the responsive glass membrane.

In the embodiment described above, the membrane resistance value is converted into a resistance value at a predetermined temperature set in advance, but the predetermined temperature may be converted into, for example, an average value of temperatures measured by the temperature measurement unit during a predetermined period.

In the embodiment described above, a case where the determination unit of the measurement device determines the time to replace the responsive glass membrane based on the membrane resistance value of the responsive glass membrane and a temperature has been described, but a user (person) may determine the time for replacement. For example, it is conceivable that the output unit of the measurement device is configured to be able to output a replacement index for determining the time to replace the responsive glass membrane, such as displaying the replacement index on a screen. The replacement index in this case is a membrane resistance value and a temperature and may further include a threshold thereof. With such a configuration, the user (person) can determine the time to replace the responsive glass membrane based on the replacement index.

In the embodiment described above, a responsive glass membrane detachable from the housing is used, and only the responsive glass membrane is replaced. However, the present invention is not limited to this configuration, and a glass electrode in which the responsive glass membrane and the housing are integrally formed may be used, and the entire glass electrode may be replaced at the time of replacement. In this case, the glass electrode and the comparison electrode may be separately provided instead of the composite electrode in which the glass electrode and the comparison electrode are integrated.

The responsive glass membrane used may be colored depending on its type. It is considered that when a responsive glass membrane with color is dissolved by hydrofluoric acid to decrease the thickness, the color also decreases. Specifically, a responsive glass membrane with color can be prepared by intentionally adding a colored element, for example, a lanthanoid such Ce, Nd, Pr, or Er, a transition metal element such as Ni or Cu, and an element having a mixed valence such as V, Ti, Cr, or Mn to the composition of responsive glass membrane. In particular, the lanthanoid reduces the resistance of the responsive glass membrane and improve the water resistance and responsiveness of the responsive glass membrane. A responsive glass membrane with color can be prepared by changing part of La which is an essential element of the responsive glass membrane to these elements.

Thus, a color monitoring unit that measures the spectral reflectance or the like of the responsive glass membrane and monitors the chromaticity of the responsive glass membrane may be further provided, and the time to replace the responsive glass membrane may be determined based on not only the membrane resistance value described above but also the chromaticity. The replacement time may be estimated by a person visually comparing color samples or the like created in advance in maintenance in addition to the device that monitors the chromaticity.

As a specific determination method, for example, a threshold value may be set in advance regarding the chromaticity of the responsive glass membrane for each type, and when the chromaticity becomes equal to or less than the threshold, the determination unit may determine that it is necessary to replace the responsive glass membrane.

Further, the membrane resistance value may be further corrected based on the chromaticity by using a formula, a table, or the like representing the correlation between the membrane resistance value and the chromaticity, or the chromaticity may be used as an index independent of the membrane resistance value, and for example, the time to replace the responsive glass membrane may be determined when either the membrane resistance value or the chromaticity is equal to or less than a threshold.

In addition, various modifications and combinations of embodiments may be made without departing from the spirit of the present invention.

### Industrial Applicability

According to the present invention, the time to replace the responsive glass membrane for measuring a liquid sample containing hydrofluoric acid can be determined, and thus the responsive glass membrane can be replaced less frequently than before in a case where the pH of the liquid sample containing hydrofluoric acid needs to be continuously monitored.

## Claims

1. A measurement device for measuring a hydrogen ion concentration of a liquid sample containing hydrofluoric acid, the measurement device comprising:
a glass electrode that measures a hydrogen ion concentration in the liquid sample, the glass electrode including a responsive glass membrane;
a membrane resistance measurement unit that measures a membrane resistance value of the responsive glass membrane;
a temperature measurement unit that measures a temperature of an environment in which the responsive glass membrane is disposed; and
an output unit that outputs a replacement index for replacing the responsive glass membrane based on the membrane resistance value and the temperature.

2. The measurement device according to claim 1, further comprising a determination unit that determines a time to replace the responsive glass membrane based on the membrane resistance value and the temperature.

3. The measurement device according to claim 1 or 2, wherein the membrane resistance value is converted into, based on the temperature, a membrane resistance value at a predetermined temperature, and a time to replace the responsive glass membrane is determined based on the converted value.

4. The measurement device according to any one of claims 1 to 3, further comprising a storage unit that stores a correlation between the membrane resistance value and the temperature measured by the temperature measurement unit.

5. The measurement device according to claim 4, wherein the storage unit further stores a correlation between a composition of the responsive glass membrane and the membrane resistance value.

6. The measurement device according to claim 3, wherein a warning is issued when the converted value is equal to or less than a preset threshold.

7. The measurement device according to any one of claims 1 to 6, wherein the responsive glass membrane contains one or more elements selected from scandium, yttrium, titanium, zirconium, hafnium, niobium, and tantalum.

8. The measurement device according to any one of claims 1 to 7, wherein a time to replace the responsive glass membrane is determined based on a chromaticity or color of the responsive glass membrane.

9. A method for determining a time to replace a responsive glass membrane of a glass electrode for measuring a hydrogen ion concentration of a liquid sample containing hydrofluoric acid, the method comprising:
measuring a membrane resistance value of the responsive glass membrane;
measuring a temperature of an environment in which the responsive glass membrane is disposed; and
determining a time to replace the responsive glass membrane based on the membrane resistance value and the temperature.
